# FASCICULE DE BREVET EUROPEEN

(11) **EP 0 526 287 B1**
(45) Date de publication et mention de la délivrance du brevet: **06.09.1995**
(21) Numéro de dépôt: 92401951.6
(22) Date de dépôt: 07.07.1992
(51) Int. Cl.: H01R 39/24, G11B 5/53

(54) **Balai de mise au même potentiel électrique d'un rotor et d'un stator d'un enregisteur magnétique**
Kohlenbürste, die sich auf demselben elektrischen Potential befindet wie der Rotor und der Stator eines magnetischen Aufnahmeapparates
Carbon brush, on the same electrical potential as the rotor and stator of a magnetic recorder

(30) Priorité: 24.07.1991 FR 9109379
(43) Date de publication de la demande: 03.02.1993
(73) Titulaire: SCHLUMBERGER INDUSTRIES, F-92120 Montrouge (FR)
(72) Inventeur: Juncker, Richard, F-92370 Chaville (FR)
(74) Mandataire: Dupont, Henri

(56) Documents cités:
- EP-A- 0 370 818
- DE-A- 1 910 906
- PATENT ABSTRACTS OF JAPAN vol. 13, no. 59 (P-826) 10 Février 1989 & JP-A-63 249 904 (SANYO ELECTRIC CO.) 17 Octobre 1988

## Description

La présente invention concerne un enregistreur magnétique à têtes tournantes comprenant un stator et un rotor, le contact électrique entre ces deux pièces étant assuré par au moins un balai de mise au même potentiel électrique du stator et du rotor de façon à écouler vers le stator les charges électrostatiques accumulées dans le rotor.

Plusieurs solutions existent déjà pour réaliser une connexion électrique entre deux pièces dont l'une est animée d'un mouvement de rotation par rapport à l'autre. On peut par exemple utiliser une bille placée en contact avec l'axe du rotor, à l'une de ses extrémités, et avec le stator. Cependant ce dispositif donne lieu à des interruptions brèves de contact électrique, appelées microcoupures, car la bille n'est en contact avec le rotor ou le stator que par une surface très faible (théoriquement par un seul point).

On connait également un contact par cils qui permet de multiplier les points de contact et donc de diminuer les microcoupures. Les cils de ce type de contact sont des fils métalliques réalisés en cuivre ou en bronze et de diamètre voisin de quelques dixièmes de millimètres. Chaque fil est en quelque sorte une lame de ressort assurant le contact entre le rotor et le stator. Du fait de la rigidité de ces fils métalliques, leur nombre est relativement faible, généralement une dizaine. Il se produit alors des microcoupures dues au fait que pendant des instants très brefs aucun fil n'est en contact avec la pièce tournante. Il n'est cependant pas possible d'augmenter le nombre des fils pour pallier cet inconvénient car la force de contact du balai contre le stator serait trop importante et on assisterait à une usure rapide des fils et de la surface de contact du rotor avec les fils.
Dans les moteurs tournants on utilise des balais à charbon à cause des courants relativement élevés circulant dans ces moteurs. Les coupures de contact sont importantes et se traduisent généralement par des étincelles dues à la décharge électrique entre la surface de contact et le balai. Cette solution n'est pas adaptée au faible courant. Toujours dans les moteurs tournants, le brevet GB 1,191,234 décrit un balai comprenant des fibres de carbone recouverte d'un revêtement métallique de façon à en diminuer leurs résistances électriques. Ces fibres métallisées servent à conduire des courants électriques élevés jusqu'à 155 Ampères par centimètre carré. Le problème des microcoupures n'est pas envisagé car il ne se pose pas dans ce type de machines.

Il existe également des contacts électriques au mercure, lequel assure la liaison électrique entre le rotor et le stator. Il y a cependant des problèmes d'étanchéité du réceptacle contenant le mercure et donc des risques de pollution de l'environnement. Ce risque est d'autant plus grand que le rotor subit des accélérations importantes, ce qui est le cas par exemple pour les enregistreurs magnétiques à têtes tournantes.

On remarquera enfin que les roulements à billes que l'on utilise généralement entre un stator et un rotor ne peuvent être utilisés pour établir un bon contact électrique. En effet, un film de lubrifiant se forme sur les billes en roulant, ce lubrifiant étant généralement électriquement isolant. Il en est de même pour les paliers lisses : un film isolant de lubrifiant se forme entre les paliers.

Les dispositifs de l'art antérieur présentent des inconvénients graves tels que l'apparition de microcoupures, l'usure prématurée des balais et des pièces en contact avec les balais ainsi que des risques de pollution de l'environnement. Ces inconvénients les rendent inutilisables pour assurer l'écoulement des charges électrostatiques, et donc le transport d'un courant électrique de très faible intensité, sans microcoupure entre le rotor et le stator d'un enregistreur magnétique à têtes tournantes. On sait que dans ces enregistrements, les données enregistrées (ou lues) sont sous forme de bits représentés chacun par un courant électrique de très faible intensité. De plus, ces bits sont enregistrés ou lus à des fréquences élevés, qui peuvent aller jusqu'à 600 Megabits par seconde. Il est donc primordial d'évacuer efficacement et sans interruption, même très brève, les charges électrostatiques qui se créent dans le rotor, de façon à ne pas perturber la lecture ou l'écriture des données.

L'invention concerne un enregistreur magnétique à têtes tournantes muni de moyens d'écoulement des charges électrostatiques entre le stator et le rotor qui ne présentent pas les inconvénients de l'art antérieur et qui ont notamment les qualités suivantes :
- faible résistance ohmique (quelques ohms),
- absence de microcoupures,
- usure limitée,
- faible sensibilité aux variations des conditions climatiques
- absence de risque de pollution.
- très faible sensibilité aux imperfections géométriques du système tournant.

Conformément à la présente invention, l'enregistreur magnétique à têtes tournantes comprend un stator et un rotor, ce dernier supportant les têtes tournantes, au moins un balai pour mettre le rotor et le stator au même potentiel électrique pour l'écoulement sans microcoupure des charges électriques, ledit balai comprenant un paquet de fibres de carbone parallèles de petit diamètre dont l'une des deux extrémités est destiné à venir en contact avec ledit rotor, et le nombre de fibres de carbone étant suffisamment élevé pour obtenir un contact électrique sans microcoupure entre le stator et le rotor.

De façon avantageuse le balai comporte un tube dans lequel est logé le paquet de fibres de carbone, lequel dépasse légèrement du tube à son extrémité qui est destinée à venir en contact avec la pièce tournante. Le tube est avantageusement un tube métallique bon conducteur électrique en contact avec la pièce fixe.

A l'extrémité du paquet de fibres destinée à ne pas être en contact avec la pièce tournante, les fibres sont avantageusement fixées ensemble par collage.

Un paquet comporte avantageusement au moins 5000 fibres de carbone, chacune d'elles ne dépassant pas 15 microns de diamètre.

L'enregistreur magnétique comprend avantageusement trois balais localisés dans un même plan à 120° l'un par rapport à l'autre.

L'invention est exposée ci-après plus en détail à l'aide de dessins représentant un mode de réalisation se rapportant à un enregistreur magnétique de la tête tournante.

La figure 1 représente en coupe une partie d'un tambour d'analyse d'un enregistreur magnétique à têtes tournantes comportant un rotor et un stator ainsi que le balai et le contact à plusieurs balais conformes à la présente invention.

La figure 2 représente vu de dessus le contact électrique à 3 balais de la figure 1.

La figure 3 est une coupe du contact électrique de la figure 2 selon les flèches AA.

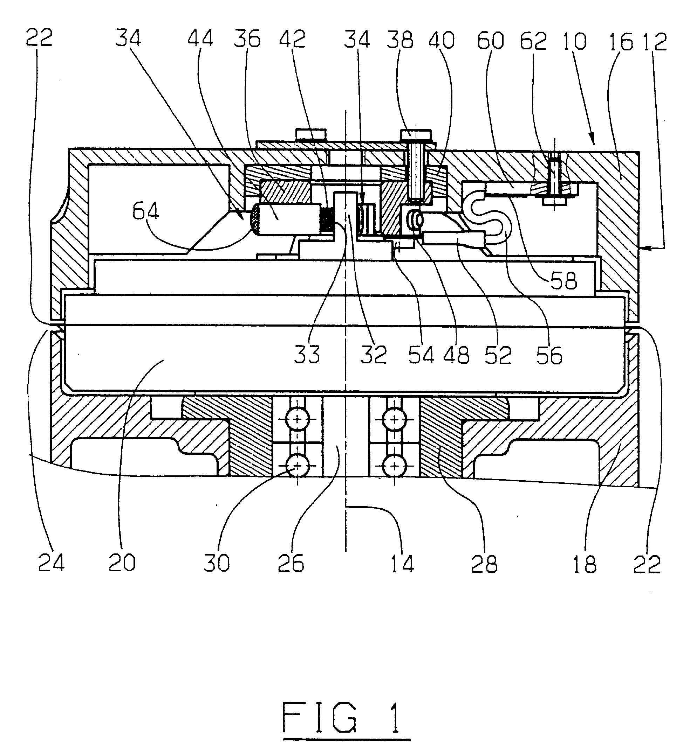

L'enregistreur comporte un tambour d'analyse 10, appelé aussi "scanner", composé d'un cylindre fixe 12 d'axe longitudinal 14 formé d'un tambour supérieur 16 et un tambour inférieur 18. Ces tambours sont fixes et sont coaxiaux, ayant pour axe commun l'axe 14. Les deux tambours inférieur et supérieur sont fixés ensemble par des moyens non représentés. Le tambour d'analyse comporte également un plateau tournant 20 supportant des têtes magnétiques. Ce plateau a sensiblement la forme d'un disque ayant un axe de rotation confondu avec l'axe longitudinal 14 du cylindre 12. Des têtes magnétiques 22, généralement au nombre de 4, sont fixées à intervalles réguliers à la périphérie du plateau tournant 20 et positionnées dans une fente 24 laquelle est constituée par l'espace laissé libre entre les deux tambours 16 et 18. Une bande magnétique, non représentée, peut se déplacer devant la fente 24 et donc devant les têtes magnétiques 22 pour la lecture et/ou l'écriture d'information sur la bande. Le plateau tournant 20 est muni d'un arbre 26, d'axe longitudinal confondu avec l'axe 14 et le tambour d'analyse de la figure 1 comporte également des moyens non représentés pour la mise en rotation de cet arbre et donc du plateau tournant. L'axe de rotation 26 est fixé dans une pièce 28 par l'intermédiaire de roulements à billes 30. La pièce de fixation 28 est fixe et solidaire du tambour inférieur 18.

On remarque que, schématiquement, le tambour d'analyse est constitué d'un stator qui n'est autre que le cylindre fixe 12 et d'un rotor qui n'est autre que le plateau tournant 20 avec son arbre de rotation 26. Les signaux électriques issus des têtes magnétiques 22 doivent être acheminés jusqu'au stator. Ces signaux peuvent être de très faible amplitude, aussi faible qu'un microvolt environ, il est impératif que le rotor et le stator soient à un même potentiel électrique. Ce potentiel électrique peut être par exemple le potentiel de masse. La rotation rapide du plateau tournant engendre des charges électro-statiques qu'il est nécessaire de collecter et d'évacuer efficacement à la masse de l'enregistreur. Pour ce faire, le plateau tournant 20 comporte un collecteur 32 ayant une surface cylindrique lisse 33. Ce collecteur est réalisé en laiton doré, centré à 0,02 mm près par rapport à l'axe 14. Le contact électrique entre le stator et le collecteur 32 est assuré par 3 balais identiques 34 localisés dans un même plan perpendiculaire à l'axe de rotation 14 et à 120° l'un par rapport à l'autre. Les balais 34 sont fixés sur un support 36 lequel est fixé au cylindre 16 à l'aide de trois vis 38 par l'intermédiaire d'une partie électriquement isolante 40.
Chaque balai 34 est formé d'un paquet de fibres de carbone venant frotter par leurs extrémités 42 sur la paroi lisse 33 du connecteur 32. Ce paquet de fibres est constitué de plusieurs milliers de fibres parallèles serti dans un tube métallique 44 et dépassant de celui-ci de quelques millimètres de sorte que les fibres soient en contact avec la surface lisse du collecteur. La grande quantité de fibre dans un paquet permet un contact sans microcoupure, le contact étant toujours assuré par un nombre suffisant de fibres. Le nombre de fibres est avantageusement supérieur ou égal à 5000. Il est de préférence de l'ordre de 10000 à 15000.
Chaque fibre étant très fine, d'un diamètre inférieur ou égal à 15 microns et de préférence voisin de 6 à 8 microns, la pression de contact des fibres est faible. Il en résulte une faible usure des fibres et du collecteur 32. Le dépassement des fibres du tube métallique 44 à l'extrémité 42 du paquet de fibres est de l'ordre de 2 millimètres. A son autre extrémité 64, les fibres sont arrêtées par collage avec par exemple une colle polymérisant aux rayons ultraviolets.

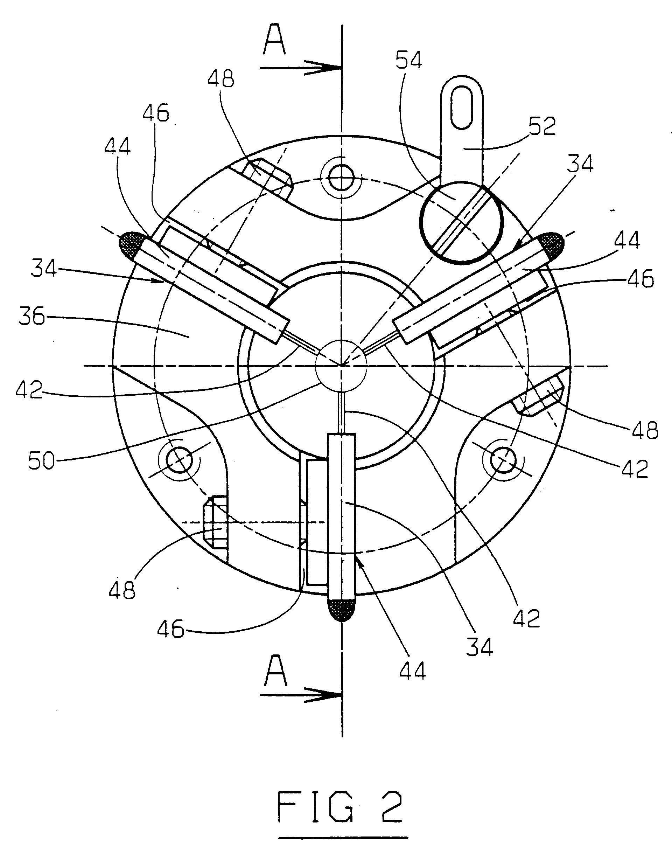

En se reportant à la figure 2 qui est une vue de dessus du contact électrique entre le rotor et le stator, on note que le support 36 supportant les balais 34 est muni de trois logements 46 dans lesquels sont fixés les balais 34 par l'intermédiaire d'une vis de réglage 48. Les extrémités 42 des fibres de carbone sont localisées sur un cercle 50 de diamètre 2,5 millimètres. La partie lisse 33 du collecteur 32 en contact avec les fibres de carbone a un diamètre de 3 millimètres. Il en résulte une application de l'extrémité des fibres d'environ 0,25 millimètre contre la surface lisse du collecteur 32. Les tubes métalliques 44 des balais sont fixés sur le support 36 en assurant un bon contact électrique. Ce support 36 est métallique. Une cosse de connexion électrique 52 est fixée au plateau 36 à l'aide d'une vis 54. Un fil électrique 56 (voir figure 1) relie la cosse 52 à un circuit imprimé 58 fixé à un socle 60 lequel est maintenu au cylindre 16 à l'aide d'une vis 62. Il en résulte que les fibres de carbone sont reliées électriquement au circuit 58. Ce circuit peut être simplement connecté à un potentiel de référence, tel que le potentiel de masse, ou alors être utilisé pour le passage de signaux électriques entre le collecteur 32 et une autre pièce de l'enregistreur magnétique reliée électriquement au circuit imprimé 58. Le balai ou le contact électrique selon l'invention peut donc aussi être utilisée pour la transmission de signaux électriques entre le rotor et le stator d'un enregistreur magnétique.

On peut remarquer que le tube métallique 44 des balais 34 assure à la fois le maintien du paquet de fibres et le contact électrique entre les fibres et le support 36. Le tube 44 pourrait ne pas être en un matériau conducteur et dans ce cas la connexion électrique entre les fibres et le support 36 pourrait se faire par tout moyen approprié, tel que par un fil en contact avec les fibres et soudé au support 36. D'autres moyens qu'un tube peuvent être utilisés pour maintenir les fibres entre elles.

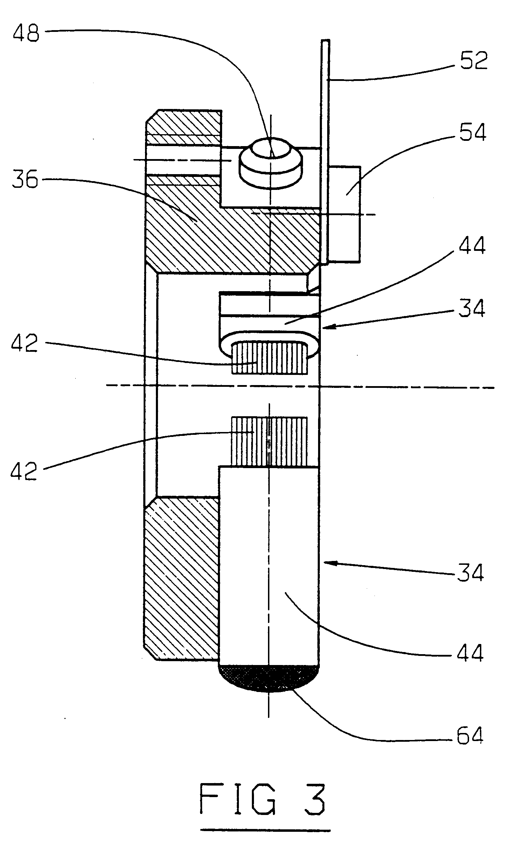

La figure 3 représente le contact électrique de la figure 2 en coupe selon les flèches AA. Les éléments communs aux figures 1, 2, 3 portent les mêmes numéros de référence. On voit ainsi sur la figure 3 deux des trois balais 34 comportant chacun un paquet de fibres de carbone dont une extrémité 42 est destinée à être en contact avec la paroi lisse 33 du collecteur 32, l'autre extrémité 64 des fibres de carbone étant maintenues entre elles par collage. Le paquet de fibres de carbone est serti dans le tube métallique 44.

Des expériences réalisées à partir du montage des figures 1 à 3 ont montré l'absence de microcoupures de durée supérieure à 1 nanoseconde. La valeur moyenne de la résistance de contact des fibres de carbone sur le collecteur 32 a été mesurée à environ 0,5 Ohm. Cette résistance de contact ne varie pas de façon significative dans une plage de température de 0 à 70° Celsius et dans une plage de degrés hygrométriques variant de 0 à 100.

## Revendications

1. Enregistreur magnétique à têtes tournantes (22) comprenant un stator (12) et un rotor (20), ce dernier supportant lesdites têtes tournantes, au moins un balai (34) pour mettre ledit rotor et ledit stator au même potentiel électrique pour l'écoulement sans microcoupure des charges électrostatiques, caractérisé en ce que ledit balai comprend un paquet (34) de fibres de carbone parallèles de petit diamètre dont l'une (42) des deux extrémités est destinée à venir en contact avec ledit rotor, et le nombre de fibres de carbone étant suffisamment élevé pour obtenir un contact électrique sans microcoupure entre le stator et le rotor.

2. Enregistreur selon la revendication 1 caractérisé en ce que ledit balai comporte un tube (44) dans lequel est logé ledit paquet de fibres lequel dépasse légèrement dudit tube à son extrémité (42) destinée à venir en contact avec ladite pièce tournante (20).

3. Enregistreur selon la revendication 2 caractérisé en ce que ledit tube (44) est un tube métallique, bon conducteur électrique.

4. Enregistreur selon l'une des revendications 2 et 3 caractérisé en ce que ledit paquet de fibre est fixé dans ledit tube par sertissage.

5. Enregistreur selon l'une des revendications précédentes caractérisé en ce que les fibres de carbone de l'autre extrémité (64) du paquet destinée à ne pas être en contact avec ladite pièce tournante sont fixées ensemble par collage.

6. Enregistreur selon l'une des revendications précédentes caractérisé en ce que ledit paquet (34) comprend au moins 5.000 fibres de carbone.

7. Enregistreur selon l'une des revendications précédentes caractérisé en ce que lesdites fibres de carbone ont un diamètre inférieur ou égal à 15 microns.

8. Enregistreur selon l'une des revendications précédentes caractérisé en ce qu'il comprend trois balais (34) disposés dans un même plan à 120 degrés l'un par rapport à l'autre.

## Patentansprüche

1. Magnet-Aufzeichnungsvorrichtung mit sich drehenden Köpfen (22), enthaltend einen Stator (12) und einen Rotor (20), wobei letzterer die sich drehenden Köpfe trägt, sowie wenigstens einen Schleifkontakt (34), um den Rotor und den Stator auf das gleiche elektrische Potential zu bringen, damit elektrische Ladungen ohne Mikrounterbrechungen fließen können, dadurch gekennzeichnet, daß der Schleifkontakt ein Paket (34) von parallelen Kohlefasern mit kleinem Durchmesser umfaßt, von dessen beiden Enden eines (42) dazu vorgesehen ist, den Rotor zu berühren, und wobei die Anzahl der Kohlefasern ausreichend hoch ist, damit ein elektrischer Kontakt ohne Mikrounterbrechungen zwischen dem Stator und dem Rotor erhalten wird.

2. Aufzeichnungsvorrichtung nach Anspruch 1, dadurch gekennzeichnet, daß der Schleifkontakt ein Rohr (44) enthält, in welchem das Faserpaket aufgenommen ist, das geringfügig über das Rohr an dem Ende (42) hinausragt, das dafür vorgesehen ist, das sich drehende Teil (20) zu berühren.

3. Aufzeichnungsvorrichtung nach Anspruch 2, dadurch gekennzeichnet, daß das Rohr (44) ein metallisches, elektrisch gut leitendes Rohr ist.

4. Aufzeichnungsvorrichtung nach einem der Ansprüche 2 und 3, dadurch gekennzeichnet, daß das Faserpaket in dem Rohr durch Einzwängen befestigt ist.

5. Aufzeichnungsvorrichtung nach einem der vorhergehenden Ansprüche, dadurch gekennzeichnet, daß die Kohlefasern an dem anderen Paketende (64), das nicht dafür vorgesehen ist, das sich drehende Teil zu berühren, zusammen durch Kleben befestigt sind.

6. Aufzeichnungsvorrichtung nach einem der vorhergehenden Ansprüche, dadurch gekennzeichnet, daß das Paket (34) wenigstens 5.000 Kohlefasern umfaßt.

7. Aufzeichnungsvorrichtung nach einem der vorhergehenden Ansprüche, dadurch gekennzeichnet, daß die Kohlefasern einen Durchmesser von kleiner oder gleich 15 Mikrometern aufweisen.

8. Aufzeichnungsvorrichtung nach einem der vorhergehenden Ansprüche, dadurch gekennzeichnet, daß sie drei Schleifkontakte (34) umfaßt, die in derselben Ebene relativ zueinander in einem Winkel von 120 Grad angeordnet sind.

## Claims

1. A rotary head magnetic recorder (22) comprising a stator (12) and a rotor (20), said rotor supporting said rotary heads, at least one brush (34) for putting said rotor and said stator at the same electrical potential for dissipating electrostatic charge without micro-interruptions, characterized in that said brush comprises a bundle (34) of small-diameter parallel carbon fibers, each having one end (42) for coming into contact with said rotor, and the number of carbon fibers being sufficiently high to ensure that electrical contact is obtained without micro-interruptions between the stator and the rotor.

2. A recorder according to claim 1, characterized in that the said brush includes a tube (44) in which the said bundle of fibers is received, which bundle projects a little from said tube at its end (42) for coming into contact with said rotary part (20).

3. A recorder according to claim 2 , characterized in that said tube (44) is a metal tube that is a good conductor of electricity.

4. A recorder according to claim 2 or 3, characterized in that said bundle (34) of fibers is fixed in said tube by crimping.

5. A recorder according to any of the preceding claims, characterized in that the carbon fibers at the other end (64) of the bundle that is not intended to come into contact with said rotary part are fixed together by means of adhesive.

6. A recorder according to any of the preceding claims, characterized in that said bundle (34) comprises at least 5,000 carbon fibers.

7. A recorder according to any of the preceding claims, characterized in that said carbon fibers have a diameter of not more than 15 microns.

8. A recorder according to any of the preceding claims, characterized in that it comprises three brushes (34) lying in the same plane and at 120° intervals relative to one another.
